# EUROPEAN PATENT SPECIFICATION

(11) **EP 1 361 961 B1**
(45) Date of publication and mention of the grant of the patent: **29.06.2011**
(21) Application number: 02711117.8
(22) Date of filing: 18.02.2002
(51) Int. Cl.: B44C 1/00, B44C 1/22, C04B 41/00, B28D 5/00

(54) **FORMING A MARK ON A GEMSTONE OR INDUSTRIAL DIAMOND**
MARKIERUNG VON EDELSTEINEN SOWIE INDUSTRIELLEN DIAMANTEN
FORMATION D'UNE MARQUE SUR UNE PIERRE PRECIEUSE OU UN DIAMANT INDUSTRIEL

(30) Priority: 16.02.2001 GB 0103881
(43) Date of publication of application: 19.11.2003
(73) Proprietor: De Beers Centenary AG, 6000 Luzern 6 (CH)
(72) Inventor: SMITH, James, Gordon, Charters, High Wycombe, Buckinghamshire HP13 5QL (GB); GUY, Keith, Barry, Marlow Bottom, Middlesex SL7 3PN (GB)
(74) Representative: Talbot-Ponsonby, Daniel Frederick
(86) International application number: PCT/GB2002/000709
(87) International publication number: WO 2002/066262

(56) References cited:
- WO-A-00/76583
- WO-A-92/09876
- WO-A-97/03846
- WO-A-98/52773
- WO-A1-99/00706
- DE-A- 2 702 176
- DE-A- 4 439 714
- US-A- 4 478 677
- US-A- 5 410 125
- US-A- 5 573 684
- US-B1- 6 291 110
- US-B2- 6 480 261

## Description

### Background to the Invention

The present invention relates to forming a mark, preferably a micro mark, on a gemstone or industrial diamond. The term "micro mark" as used herein is any very small mark on a gemstone or industrial diamond. The mark may be a recognisable commercial brand or trade mark, such as the name or logo of a diamond jewellery retailer, manufacturer or trade organisation. It is possible to apply the marks to industrial diamonds, some of which (like wire-drawing dies) have polished surfaces. Nonetheless, the invention is more applicable in the field of jewellery, the mark being applied to one of the polished facets of a gemstone, preferably the table. Various proposals have been made for forming on gemstones or industrial diamonds marks which are invisible to the naked eye; thus in the case of a gemstone, the mark can be on a facet which will be visible in a jewellery setting. In a strict sense, most viable procedures form the mark in (rather than on) the surface in that the mark is formed by removal of material (termed milling). However, the expressions such as "on the surface" as used herein include such milling, in accordance with conventional parlance.

The depth of the mark, primarily, is controlled so as to limit the visibility of the mark to a level that does not detract from the aesthetic properties and hence value of the gemstone - specifically for diamonds, it is preferred that the mark be such that it does not detract from the internal clarity grade of the diamond. In general, the mark should be invisible to the naked eye. In the broadest sense, the mark should not detract from the beauty or aesthetic appearance of the gemstone. There are various standards, but the normal requirement is that internal defects be invisible under x10 magnification, by using the naked eye aided with a x10 loupe, although as the marking of diamonds becomes more popular, some visibility of the mark may be acceptable, particularly as the marks are not strictly internal defects. For example, marks occupying an area of up to 1 mm² etched to a depth of 25 nm or 50 nm can be acceptable although they are visible under certain lighting conditions with x10 magnification. Much deeper marks, up to 500 nm deep, may also be acceptable. A minimum depth is about 20 or about 30 nm. However, it is preferred that on a gemstone the mark be shallow enough not to produce significant light scattering from any region. In WO 97/03846, there is a description of the dimensions of the marks that can be formed. The lines of which the marks are formed can have a width:depth ratio of say from about 20:1 to about 3000:1, but the preferred range is from 50:1 to 1000:1.

The marks can be formed in any suitable manner. One way is to use microlithography, where the facet is spin-coated with a resist or photoresist, and either an image of a mask is projected onto the coated facet using an exposure radiation which exposes the resist (normally, a lens system is used which substantially reduces the image size relative to the mask) or an image is written on the coated facet using a moving beam (direct beam writing). The resist is then developed to remove selected portions, in effect providing a contact mask on the facet. During development, the exposed and unexposed regions of the resist are developed at different rates - in a positive tone resist, it is the exposed regions that dissolve more readily, leaving the surface or facet unmasked in the exposed regions. There is a detailed description of microlithography in Thompson et al. "Introduction to Microlithography", 2nd edition (1994). The gemstone or industrial diamond can then be milled using for instance plasma etching as disclosed in US 5 344 526 or WO 98/52773. Another way is to use radiation which directly attacks the surface of the diamond or gemstone, either projected through a mask or written directly on the surface, for instance as disclosed in WO 97/03846.

### Background to the Invention

When projecting the mask image onto the surface of the gemstone or industrial diamond, the operator must align the mark, for example to the centre of the table of the gemstone, and it may be desired to orient the mark so that for example text incorporated in the mark is parallel to one of the edges of the surface. Furthermore, the focus of the exposure image must be set.

US 6 016 185 describes an arrangement for manufacturing semi-conductors and micromechanical devices by projecting an array of masks using a tiling technique in which the image must be the same size as the mask. It is possible to use a bi-directional optical path for imaging an alignment mark on the workpiece on the bottom surface of the mask. The image is in an inconvenient location for fine focusing, and the arrangement could not be used if there were demagnification.

WO 97/03846 discloses forming an information mark on a polished facet of a diamond gemstone by irradiating the surface with ultraviolet radiation. A small fraction of the exposure radiation is deflected and used to measure the fluence of the exposure radiation at the diamond surface during processing. Rangefinder laser radiation is used to ensure that the plane of the diamond surface coincides with the plane of best focus for the image of the mask, the laser radiation being a beam which forms a spot on the diamond.

It is an object of the present invention to overcome or ameliorate at least one of the disadvantages of the prior art, or to provide a useful alternative.

According to the invention, there is provided a method as claimed in Claim 1 and apparatus as claimed in Claim 22. The dependant claims claim preferred and/or optional features.

The invention can be used with one of two different ways of forming the mark on the gemstone or diamond, namely by projecting the image of a mask onto the gemstone or diamond or onto a resist thereon, or by writing on the gemstone or diamond or resist by scanning or moving a beam such as a laser beam (direct beam writing). In each way, the exposing radiation can expose a resist for later etching, or can directly attack the surface of the gemstone or diamond. Direct beam writing has the advantage that different patterns can be produced in the resist without the need to prepare a projection mask for each, thus allowing e.g. serial numbers or a selection of marks to be produced on the diamond. However, the setting-up image is preferably projected through a mask.

The use of the setting-up image provides a simple way of locating (registration) and orientating the exposure image. Furthermore, the use of the setting-up image provides a good way of focusing the exposure image, for instance when projecting the image of a mask using visible or ultraviolet light. The operator may alter the position of the gemstone or industrial diamond relative to the focal plane using mechanical adjustments. If the setting-up image is projected through an objective lens or lens system and is sensed through the objective lens or lens system, the apparent error in focus is doubled because the setting-up radiation is reflected back through the objective lens or lenses and hence travels a distance equal to twice the error in focus; this exaggeration of the focus error enables the focus to be set very accurately and easily. However, it is possible to insert say a beam splitter between the objective lens or lens system and the gemstone or diamond and sense the image without it passing through the primary objective lens or lens system.

In carrying out the method, the setting-up image may be sensed by an electronic image detector, using any suitable wavelength for the setting-up radiation, or, if the setting-up radiation is in the visible range, the setting-up image can be viewed by eye. Thus the exposure region of a mask may define a shape corresponding to that of the micro mark to be formed or may define alignment marks to assist in the accurate location of the exposure image on the stone. Alternatively, if the exposure radiation is scanned, such as in the case of a laser beam, the exposure radiation can be scanned through the exposure region, carrying out direct beam writing. In theory it would be possible to have the alignment region transparent or have no mask at all and the setting-up radiation also scanned.

When applying micromarks to a gemstone or industrial diamond, it is desirable, particularly in the case of gemstones, to be able to apply a unique serial number. However, if a projection mask is being used, this can introduce significant expense because different masks are required for each stone.

WO 97/03846 and US 5 410 125 disclose the use of a projection mask. The masking effect of selected areas of the masks can be chosen according to the effect desired, but once a mask or a portion of a mask has been created, it is not changed and will continue to produce the same pattern.

According to a preferred embodiment of the invention, there is provided a method as claimed in Claim 19 and apparatus as claimed in Claim 34. The preferred embodiment provides a very simple way of marking differing marks on successive gemstones, particularly when marking serial numbers.

### Preferred Embodiments

The invention will be further described, by way of example, with reference to the accompanying drawings, in which:
Figure 1 is a schematic section illustrating a method of setting a gemstone to form a dop;
Figure 2 is a schematic optical diagram, illustrating a method of forming a mark on a gemstone by microlithography; and
Figure 3 illustrates a suitable setting-up mask for the optical system of Figure 2.

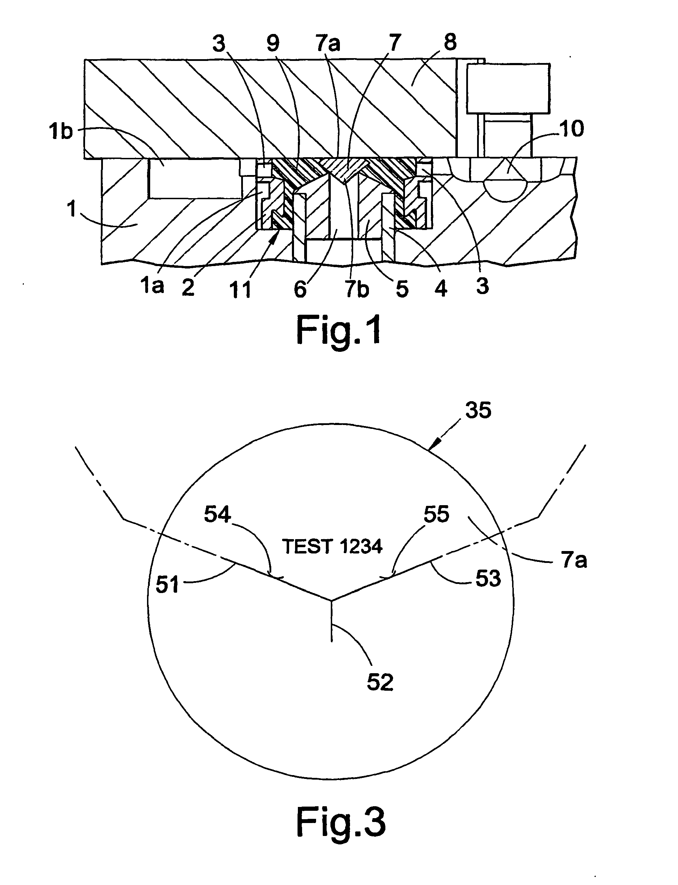

### Mounting the Diamond - Figure 1

Figure 1 shows part of an injection moulding tool having a body 1. An annular (circular) dop ring 2 having injection gates 3 is placed in a recess 1a in the body 1. A centralising pin 4 which is upwardly spring-loaded passes up the centre of the recess 1a, and carries a non-metallic insert 5 having a central bore 6. Initially, the position of the centralising pin 4 will be higher than that shown in Figure 1. Suction is applied to the central bore 6 and a diamond 7 shown as having its table 7a uppermost is placed on the top of the insert 5. A top plate 8 is closed over the cavity, pushing the diamond 7 downwards and causing the lower surface of the plate 8 to engage and level the table 7a. The vacuum is disconnected from the central duct 6. The centralising pin 4 is then locked in position and a flexible elastomer 9 such as Elastron G 1047 is injection moulded through a main gate 10 and into the space between the inner wall of the ring 2, the diamond 7, the insert 5 and the centralising pin 4. One gate 3 of the dop ring 2 registers with the main gate 10 whilst the other gate 3 registers with a duct leading to a dump 1b. When the elastomer 9 has set, the top plate 8 is removed, the centralising pin 4 pushes upwards the dop 11 formed by the ring 2 and the elastomer 9, and the dop 11 can be pulled off the top of the centralising pin 4. If rubber has leaked past the culet of the diamond 7 into the duct 6, the insert 5 will come away with the dop 11 and can be ripped out.

### Cleaning

The diamond 7 can now be cleaned, for instance by mechanical cleaning with swabs moistened in alcohol or by drawing the diamond 7 and dop 11 across a proprietary optical lens cleaning tissue. Alternatively, the dop 11 may be mounted on a vacuum chuck and rotated about an axis preferably perpendicular to the table 7a of the diamond 7. In this case, a solvent can be applied, followed by spin drying or mechanical cleaning.

### Resist Coating

If the facet is to be etched by microlithography, the dop 11 can be mounted on a vacuum chuck and rotated about the vertical axis which is perpendicular to and passes through the table 7a of the diamond 7. If a plurality of diamonds 7 have been set in the dop 11, the axis should be approximately through the centre line of the dop 11.

Photoresist is applied to cover at least the table 7a of the diamond 7. A suitable positive-tone resist material is Microposit 1818, manufactured by the Shipley Company, which is a diazonaphthoquinone/novolak resist. The chuck with the dop 11 and stone 7 are rotated at high speed, typically 4000 to 8000 r.p.m., for a period of typically 15 to 30 seconds. This results in a film of resist of uniform thickness over the greater part of the diamond table 7a, of typically one to two microns. If the top surface is continuous across the diamond table 7a, the surface of the setting material 2 and the tops of the sidewalls 5 of the dop 11, no bead or rim would be formed on the diamond table 7a.

### Pre-Exposure Bake

The resist is then baked. Typical conditions will be one minute at 115°C. This can be done by placing the dop 11 on a Peltier device with the culet of the diamond 7 in a pool of liquid solder contained in the device tip. Alternatively, the heating effect may be produced by a hotplate, inductive heating, a heating element incorporated in the dop 11, steam or liquid solder circulated over the culet, infra-red radiation on the table 7a. The temperature of the dop 11 may be measured by a thermocouple mounted in the dop 11 or in contact with it, and this measurement can control the heating means to regulate the temperature. Alternatively, the temperature may be measured and controlled through the Peltier device.

After baking, the source of heat is discontinued and the dop 11 quickly cooled, e.g. using the Peltier device as a cooler. The diamond 7 is now ready for exposure of the resist.

### Optical Exposure

The dop 11 is placed on a horizontal platen of suitable microlithography equipment for exposing the resist in a pattern corresponding to the mark to be formed, for instance by projecting a mask onto the table 7a with a reduction (de-magnification) of x10. The location, orientation and focus of the exposure image are adjusted as appropriate, the table 7a being maintained strictly parallel to and a strictly determined height above the platen of the equipment. In an alternative arrangement, the dop 11 can be held up against a downwards-facing register surface provided with an opening through which the table 7a can be irradiated. In this alternative, the underside of the dop ring 2 need not be strictly parallel to and a predetermined distance below the reference plane formed by the top of the dop ring 2.

Any suitable radiation may be used for exposing the resist. For the Microposit 1818 resist, electromagnetic radiation in the wavelength range of 350 to 450 nm is suitable. Shorter wavelengths allow higher resolution patterning. The exposure may be with a single wavelength, for instance the mercury discharge lamp G-line at 436 nm, or with a band of wavelengths, for example with a filtered tungsten/halogen lamp.

### Post-Exposure Bake

It may be desirable to subject the resist to a post-exposure bake. A process of diffusion reduces the influence of standing waves or interference fringes in the resist. The procedure is similar to that of the pre-exposure bake described above.

### Development

Development of the resist can be conventional. The apparatus used may be similar to the resist spinner described above.

### Etching

Plasma etching equipment may be obtained from for instance Oxford Plasma Technology (UK) or South Bay Technology (USA). DC discharge etching may be used but it is preferred to use a radio frequency plasma to avoid problems with the diamond charging. Reactive ion etching is preferred, the diamond being mounted on the driven electrode of the etcher rather than on the earth electrode. In one example, the diamond develops a negative bias potential relative to the plasma of eg 100 to 1000 volts. The bombardment with energetic ions from the plasma may cause a partial conversion of the unreactive diamond allotrope of carbon to more reactive forms such as graphite. Pure oxygen or an oxygen/argon mixture or air can be supplied to oxidise the graphite. The preferred plasma is 75% argon and 25% oxygen, though alternatively a pure oxygen etch could be used, followed by a pure argon etch to remove surface-terminating oxygen.

### Release

The diamond 7 is pushed out of the dop 11 and cleaned to remove the resist.

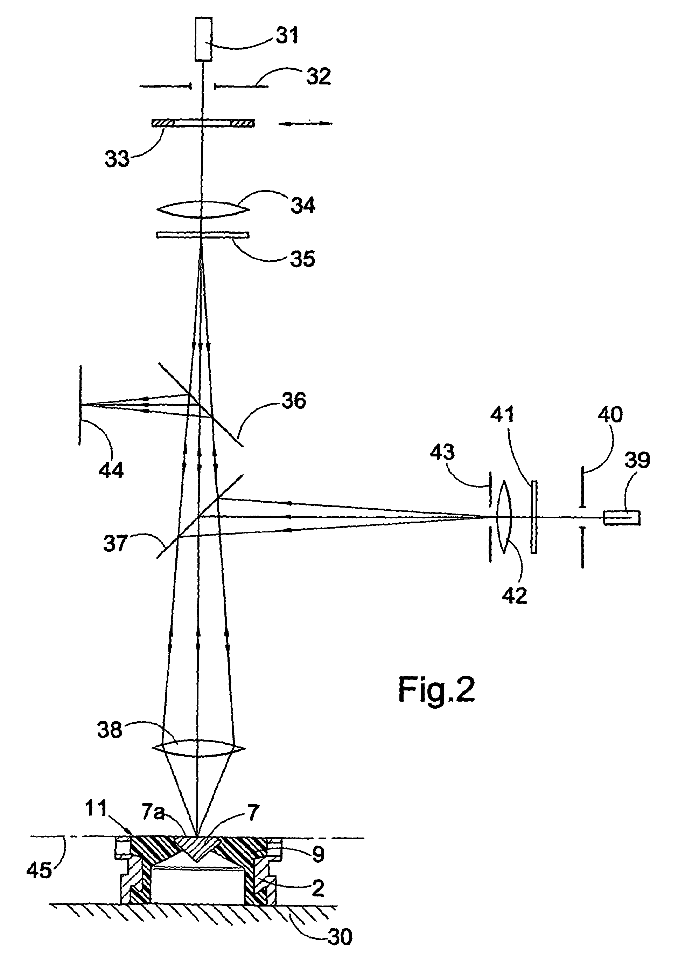

### Figure 2 - Exposing the Resist

Figure 2 shows the optical system of one arrangement for exposing the resist. The diamond 7 is in the dop 11 with a locating surface defined by the underside of the dop ring 2. The upper surface of the platen or table 30 forms an upwards-facing register surface. In this way, the table 7a of the diamond 7 is accurately positioned parallel to the table 30. The mark could be formed at the centre of the table 7a or at the edge of the table 7a. The dop 11 can slide across the table 30 and can thus be adjusted manually, or the position and rotation of the table 30 can be adjusted.

The optical system has a setting-up/exposure radiation sources (or sources) 31, a setting-up/exposure aperture stop 32, an exposure shutter 33, a setting-up/exposure field lens 34, a setting-up/exposure mask 35, a first beam splitter 36, a second beam splitter 37, an objective lens 38, an illumination radiation source 39, an illumination radiation aperture stop 40, an illumination radiation filter 41, an illumination radiation field lens 42, an illumination radiation field stop 43 and an observation plane 44. The objective lens 38 forms an image of the mask 35 at the focal plane 45. It is desirable but not essential that the objective lens 38 has the same focal length for both setting-up and exposure wavelengths and has good aberration correction for both the setting-up and exposure radiation wavelengths.

The source 31 is preferably an incandescent lamp such as a tungsten halogen lamp or a discharge lamp such as a mercury, or xenon or metal halide arc lamp. Pulsed light sources such as a xenon flash lamp, or light emitting diodes or laser sources, may alternatively be employed. The radiation may be conveyed to point 31 by a fibre optic guide, a liquid light guide and/or associated condenser lenses and mirrors. In order to locate, orientate and focus the image on the table 7a of the diamond 7 (in effect the reference plane 45), the diamond 7 is preferably illuminated by means of the illumination source 39, which provides uniform background lighting so that the whole of the diamond 7 can be seen (though with some types of setting-up radiation, the illumination may not be necessary). The wavelength of the illumination source 39 must be such that the radiation does not affect the resist - for instance, a light having a wavelength greater than 500 nm can be used. The illumination filter 41 ensures that the resist is not exposed. The radiation source 31 is then switched to setting-up radiation. The radiation source 31 may comprise two different light sources, one for setting-up and one for exposure, in which case the exposure shutter 33 may not be required, the light sources being controlled appropriately. Alternatively, if the source 31 emits both the setting-up and the exposure radiation, the exposure shutter 33 can be incorporated such that when it is closed, it provides a filter to block the exposure radiation while transmitting the setting-up radiation. The exposure shutter 33 can be located anywhere in the radiation path, and may be incorporated in the source 31 or in the mask 35. The setting-up radiation provides the setting-up image of the mask 35 on the table 7a of the diamond 7. Normally, the optical system substantially reduces the image size relative to the mask. The setting-up (and exposure) image can be reduced by about 90 per cent (x10 reduction) compared to the mask 35. In general, the reduction is preferably from about x10 to about x20 or up to about x100. However, lower reductions, from about x2 or about x4 upwards, are possible. Viewing the setting-up image by eye at the observation plane 44 (which can be the reticule plane of a microscope eye piece), the setting-up image is located in the correct position on the diamond table 7a and correctly orientated (by moving the diamond or alternatively by moving the mask 35) and is then focused mechanically. However, as an alternative, an electronic imaging detector such as a CCD camera may be located at the observation plane 44 and the setting-up image can then be viewed on a screen. By using the first beam splitter 36, the observation plane 44, where the setting-up image is sensed, is outside the optical path which is followed by the setting-up radiation before it reaches the diamond 7.

The setting-up radiation does not affect the facet of the gemstone in such a way that a mark is formed - for instance, if photolithography is being used, the setting-up radiation must not expose the resist. For the Microposit 1818 resist referred to above, the setting-up radiation can be green or yellow light in the wavelength range 500 to 550 nm, i.e. in the same range as the illuminating radiation. In general, if its intensity is sufficiently low, much lower than that of the exposure radiation, the setting-up radiation could be the same as the exposure radiation. However, the setting-up and illumination radiations are preferably of different wavelengths, to provide contrast - thus the setting-up radiation can be red light of a wavelength greater than 630 nm, depending on the chromatic aberration of the lens system. The setting-up, exposure and illumination radiations may each comprise a band of wavelengths.

Once the location, orientation and focus are set, the radiation source 31 is switched to the exposure radiation, or the exposure shutter 33 is opened, for a predetermined time. The exposure radiation exposes the resist.

The exposure field lens 34 ensures even illumination of the mask 35 by directing an image of the exposure aperture stop 32 into the entrance pupil of the objective lens 38, though other arrangements can be used to the same effect. By altering the size of the exposure aperture stop 32, the spatial coherence of the illumination may be controlled, thus altering the quality of the image produced.

The objective lens 38 may be a well-corrected microscope objective of eg x10 or x20 magnification, but other types of lenses, including those incorporating reflective elements, may be used instead. The objective lens 38 may have a field of view which is too small to allow the entire diamond table 7a to be observed. If so, a further objective lens of lower power, such as x5 magnification, can be incorporated, with a suitable mechanism such as a microscope turret for moving it in and out of the light path.

If desired, a second lens (not shown) may be placed between the exposure mask 35 and the first beam splitter 36 so as to pass parallel light through the beam splitters 36, 37 and thus achieve better optical performance in the beam splitters 36, 37.

A sensor, such as a silicon photodiode, may be incorporated to measure the amount of exposure radiation incident on the diamond table 7a, for setting the exposure time to give a predetermined exposure dose.

### Figure 3 - a first mask

The exposure mask 35 may be in the form of a glass disc or photographic film with a substantially opaque coating or film with clear regions formed where the mark is to be formed, if a positive tone resist is employed. If a negative tone resist is employed, the contrast is reversed. Because the image of the mask is reduced in size, the effect of the grain size of the film is reduced so that it is insignificant in the image.

The mask 35 shown by way of example is for forming on a diamond the mark "TEST 1234", and has alignment features for alignment on a corner of the diamond table 7a.

Black lines are parts that transmit radiation. The edge of the table 7a is indicated with dot-dash lines. The "TEST 1234" feature transmits at least the exposure radiation.

Alignment lines 51, 52, 53 and alignment curves 54, 55 transmit the setting-up radiation but not the exposure radiation. The alignment lines and curves 51-55 can be produced by an LCD (liquid crystal display) forming part of the mask 35. As an alternative, one can use a graticule in the observation plane 44, for example a microscope eyepiece cross-hair graticule if the mark is to be in the centre of the diamond table 7a.

With the setting-up image on the diamond table 7a, the "TEST 1234" feature is focused using a standard focusing arrangement (not shown). A corner of the table 7a is then placed on the line 37 and is moved manually up towards the centre of the image. Standard x and y direction micrometer adjustments can be provided for fine adjustment of the image in relation to the diamond table 7a. If the diamond 7 has a regular octagonal table 7a, with corner angles of 135°, the edges of the table 7a are aligned with the lines 51, 53; the setting-up image is then properly located and orientated. If the diamond does not have a 135° corner angle, the edges of the table 7a can be brought into contact with the curves 54, 55 with the corner on the line 52 or on an extension of the line 52.

The exposure mask 35 may be changed between exposures so that for example serial numbers may be printed. This change may be accomplished by using a sequence of photographic images as masks, or alternatively the exposure mask 35 may be adjustable (changeable at will), so that its mask effect is likewise changeable at will. In this way, successive diamonds 7 can have different exposure images projected onto them and can have different marks formed on them. The mask may incorporate movable or changeable elements in the form of numbers or individual pixels that may be adjusted. Thus the mask 35 can comprise at least a zone formed by a spatial light modulator or individual pixels whose masking effect is changeable at will. Devices such as liquid crystal light valves or a liquid crystal spatial light modulator (which may need a polariser) or micro-mirror arrays (which need to be very stable but have no requirement for polarised light and the consequential loss) may be associated with the exposure mask 35. Such devices need not be located physically in the plane occupied by the exposure mask 35 in that an imaging lens system may be used to form an image of the device in the plane of the exposure mask 35. If a micro-mirror array or other reflective type of mask is used, the illumination system 31-34 will have to be configured to illuminate the mask in reflection. As an example of changing the masking effect, in the illustration of Figure 3, the word "TEST" can form a permanent part of the mask 35 and the figures "1234" a serial number which advances for each diamond 7 marked.

### A second mask

The setting-up radiation and/or the exposure radiation may be scanned onto the diamond table 7a, instead of using a physical mask, the scanners being controlled by a programmable device such as a computer. In general, it may be preferred to scan the exposure radiation but to use a mask for the setting-up radiation, in which case the mask may be transparent to the exposure radiation but opaque to the setting-up radiation except where it is cut away to provide a setting-up image, for instance providing location, alignment, orientation and focusing patterns. In this case, the actual pattern to be marked is not used for the setting-up and special alignment marks are used.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A method of forming a mark on a gemstone or industrial diamond (7) which comprises projecting (31) an exposure radiation onto the gemstone or diamond (7) to form an exposure image thereon, the method also comprising locating and/or orientating and/or focusing the exposure image by projecting (31) onto the gemstone or diamond (7) a setting-up radiation different from the exposure radiation, the setting-up radiation not affecting the gemstone or diamond (7) in such a way that a mark is or will be formed, **characterised in that** a setting-up image is formed on the gemstone or diamond (7) and the location and/or orientation and/or focusing of the setting-up image on the gemstone or diamond (7) is adjusted, to thereby adjust the location, orientation and/or focusing of the exposure image, the setting-up image on the gemstone or diamond (7) being sensed (44) outside the optical path which is followed by the setting-up radiation before it reaches the gemstone or diamond (7).

2. The method of Claim 1, wherein the setting-up image is projected through an objective lens or lens system (38) and is sensed through the objective lens or lens system.

3. The method of Claim 1 or 2, wherein the setting-up and exposure radiations have different wavelengths.

4. The method of both Claim 2 and Claim 3, wherein the objective lens or lens system (38) is corrected for the setting-up radiation and for the exposure radiation.

5. The method of Claim 1 or 2, wherein the setting-up and exposure radiations have the same wavelengths or band of wavelengths but the setting-up radiation is of an intensity lower than that of the exposure radiation.

6. The method of any of the preceding Claims, wherein the mark is formed by lithography and a photoresist has been applied to the gemstone or industrial diamond (7), the resist being insensitive to said setting-up radiation.

7. The method of any of the preceding Claims, wherein the setting-up radiation is in the visible range.

8. The method of Claim 7, wherein the setting-up image is viewed by eye.

9. The method of any of Claims 1 to 7, wherein the setting-up image is sensed by an electronic image detector.

10. The method of any of the preceding Claims, wherein the setting-up image is formed by projecting the setting-up radiation through a mask (35), and the exposure image is formed by projecting the exposure radiation through a mask (35).

11. The method of Claim 10, wherein the setting-up mask (35) is at least in part the same as the exposure mask (35), both the setting-up radiation and the exposure radiation being projected though the mask (35) and the optical system being corrected for the setting-up radiation and for the exposure radiation.

12. The method of any of the preceding Claims, wherein the setting-up and exposure masks (35) are formed by providing a mask comprising at least one setting-up region which is opaque to the exposure radiation but transparent to the setting-up radiation and at least one exposure region which is transparent to the exposure radiation, the setting-up region defining a shape for locating and/or orientating and/or focusing the exposure image on the gemstone or diamond (7), the method comprising projecting (31) the setting-up radiation through the mask (35), to form a setting-up image on the gemstone or diamond (7), locating and/or orientating and/or focusing said setting-up image on the gemstone or diamond (7), and projecting the exposure radiation through the mask (35) to form an exposure image on the gemstone or diamond (7) and as a consequence, forming said mark on the gemstone or diamond (7).

13. The method of Claim 12, wherein the exposure region defines a shape corresponding to that of the mark to be formed.

14. The method of Claim 12, wherein the exposure region is a relatively large region transparent to the exposure radiation, the exposure radiation being scanned.

15. The method of any of the Claims 1 to 13, wherein the exposure image is formed by projecting the exposure radiation through a mask (35) with substantial demagnification.

16. The method of Claim 15, wherein the exposure image is at most about one tenth of the linear size of the mask (35).

17. The method of any of the preceding Claims, wherein the exposure image is formed by projecting the exposure radiation through a mask (35), the mask comprising at least a zone formed by individual pixels whose masking effect is changeable at will, whereby successive gemstones or diamonds can have different exposure images projected onto them.

18. The method of any of the preceding Claims, wherein the setting-up and exposure radiations are projected through a beam splitter (36), and the setting-up image is viewed through the beam splitter (36).

19. A method of forming a mark on a gemstone (7), as claimed in any of claims 1 - 18 wherein the exposure radiation is projected (31) through a mask (35) onto the gemstone (7) to form an exposure image thereon, the mask (35) comprising at least a zone formed by individual pixels whose masking effect is changeable at will, and projecting different exposure images upon successive gemstones (7) by changing the masking effect of the mask (35).

20. The method of Claim 19, wherein the mask (35) comprises liquid crystal light valves.

21. The method of Claim 19, wherein the mask (35) comprises a micro-mirror array.

22. Apparatus for use in forming a mark on a gemstone or diamond (7) using an exposure radiation, comprising:
an optical system (32, 34, 35, 38) for projecting an image onto the gemstone or diamond (7);
means (31) for projecting the exposure radiation to form an exposure image on the gemstone or diamond (7);
means (31) for projecting a setting-up radiation on the gemstone or diamond (7), the setting-up radiation not affecting the gemstone or diamond (7) in such a way that a mark is or will be formed;
and
means for adjusting the exposure image on the gemstone or diamond (7);
**characterised in that** the setting-up radiation projecting means (31) form a setting-up image on the gemstone or diamond (7), and the adjusting means are for adjusting the location and/or orientation and/or focusing of the setting-up image on the gemstone or diamond (7) to thereby adjust the location and/or orientation and/or focusing of the exposure image on the gemstone or diamond (7);
and **in that** the apparatus further comprises means (44) for sensing the setting-up image on the gemstone or diamond (7), which means are outside the optical path which is followed by the setting-up radiation before it reaches the gemstone or diamond (7).

23. The apparatus of Claim 22, wherein the setting-up image is projected through an objective lens or lens system (38) and is sensed through the objective lens or lens system (38).

24. The apparatus of Claim 22 or 23, wherein the setting-up and exposure radiations have different wavelengths.

25. The apparatus of both Claim 23 and Claim 24, wherein the objective lens or objective lens system (38) is corrected both for the exposure radiation and the setting-up radiation.

26. The apparatus of Claim 22 or 23, wherein the setting-up and exposure radiations have the same wavelength or band of wavelengths but the setting-up radiation is of an intensity lower than that of the exposure radiation.

27. The apparatus of any of Claims 22 to 26, wherein said setting-up radiation is in the visible range.

28. The apparatus of Claim 27, wherein the setting-up image (44) can be viewed by eye, for adjusting by eye the location and/or orientation and/or focusing of the setting-up image on the gemstone or diamond.

29. Apparatus according to Claim 28, and comprising magnifying means for viewing the setting-up image by eye.

30. The apparatus of any of Claims 22 to 27, comprising an electronic image detector for detecting the setting-up mark, to thereby provide a signal for adjusting the location and/or focusing of the setting-up image on the gemstone or diamond (7).

31. The apparatus of any of Claims 22 to 29, and comprising means for holding a mask (35), the optical system (32, 34, 35, 38) being for projecting an image of the mask onto the gemstone or diamond.

32. The apparatus of Claim 31, wherein the optical system (32, 34, 35, 38) projects the image of the mark with substantial demagnification.

33. The apparatus of Claim 32, wherein the exposure image is at most about one tenth of the linear size of the mask (35).

34. The apparatus of any of Claims 31 to 33, wherein the mask (35) comprises at least a zone formed by individual pixels whose masking effect is changeable at will, whereby successive gemstones or diamonds (7) can have different exposure images projected onto them.

35. The apparatus of any of Claims 31-34, wherein the mask (35) comprises liquid crystal light valves.

36. The apparatus of any of Claims 31-34, wherein the mask comprises a micro-mirror array.

## Patentansprüche

1. Verfahren zum Formen einer Markierung auf einem Edelstein oder Industriediamanten (7), welches das Projizieren (31) einer Belichtungsstrahlung auf den Edelstein oder Diamanten (7), um ein Belichtungsbild auf demselben zu formen, umfasst, wobei das Verfahren ebenfalls das Positionieren und/oder Ausrichten und/oder Fokussieren des Belichtungsbildes durch das Projizieren (31) einer von der Belichtungsstrahlung verschiedenen Einrichtungsstrahlung auf den Edelstein oder Diamanten (7) umfasst, wobei die Einrichtungsstrahlung den Edelstein oder Diamanten (7) nicht auf eine solche Weise beeinflusst, dass eine Markierung geformt wird oder werden wird, **dadurch gekennzeichnet, dass** ein Einrichtungsbild auf dem Edelstein oder Diamanten (7) geformt wird und die Position und/oder Ausrichtung und/oder Fokussierung des Einrichtungsbildes auf dem Edelstein oder Diamanten (7) eingestellt wird, um dadurch die Position und/oder Ausrichtung und/oder Fokussierung des Belichtungsbildes einzustellen, wobei das Einrichtungsbild auf dem Edelstein oder Diamanten (7) außerhalb des Lichtweges abgefühlt (44) wird, dem durch die Einrichtungsstrahlung gefolgt wird, bevor sie den Edelstein oder Diamanten (7) erreicht.

2. Verfahren nach Anspruch 1, wobei das Einrichtungsbild durch eine Objektivlinse oder ein Linsensystem (38) projiziert wird und durch die Objektivlinse oder das Linsensystem abgefühlt wird.

3. Verfahren nach Anspruch 1 oder 2, wobei die Einrichtungs- und die Belichtungsstrahlung unterschiedliche Wellenlängen haben.

4. Verfahren nach Anspruch 2 und Anspruch 3, wobei die Objektivlinse oder das Linsensystem (38) für die Einrichtungsstrahlung und für die Belichtungsstrahlung korrigiert ist.

5. Verfahren nach Anspruch 1 oder 2, wobei die Einrichtungs- und die Belichtungsstrahlung die gleichen Wellenlängen oder Wellenlängenbänder haben, aber die Einrichtungsstrahlung eine Intensität hat, die geringer ist als diejenige der Belichtungsstrahlung.

6. Verfahren nach einem der vorhergehenden Ansprüche, wobei die Markierung durch Lithographie geformt wird und ein Photoresistlack auf den Edelstein oder Industriediamanten (7) aufgebracht worden ist, wobei der Resistlack unempfindlich für die Einrichtungsstrahlung ist.

7. Verfahren nach einem der vorhergehenden Ansprüche, wobei die Einrichtungsstrahlung im sichtbaren Bereich liegt.

8. Verfahren nach Anspruch 7, wobei das Einrichtungsbild mit dem Auge betrachtet wird.

9. Verfahren nach einem der Ansprüche 1 bis 7, wobei das Einrichtungsbild durch einen elektronischen Bildsensor abgefühlt wird.

10. Verfahren nach einem der vorhergehenden Ansprüche, wobei das Einrichtungsbild durch das Projizieren der Einrichtungsstrahlung durch eine Maske (35) geformt wird und das Belichtungsbild durch das Projizieren der Belichtungsstrahlung durch eine Maske (35) geformt wird.

11. Verfahren nach Anspruch 10, wobei die Einrichtungsmaske (35) wenigstens zum Teil die gleiche ist wie die Belichtungsmaske (35), sowohl die Einrichtungsstrahlung als auch die Belichtungsstrahlung durch die Maske (35) projiziert werden und das optische System für die Einrichtungsstrahlung und für die Belichtungsstrahlung korrigiert ist.

12. Verfahren nach einem der vorhergehenden Ansprüche, wobei die Einrichtungs- und die Belichtungsmaske (35) geformt werden durch das Bereitstellen einer Maske, die wenigstens einen Einrichtungsbereich, der undurchlässig für die Belichtungsstrahlung, aber durchlässig für die Einrichtungsstrahlung ist, und einen Belichtungsbereich, der durchlässig für die Belichtungsstrahlung ist, umfasst, wobei der Einrichtungsbereich eine Form für das Positionieren und/oder Ausrichten und/oder Fokussieren des Belichtungsbildes auf dem Edelstein oder Diamanten (7) definiert, wobei das Verfahren das Projizieren der Einrichtungsstrahlung durch die Maske (35), um ein Einrichtungsbild auf dem Edelstein oder Diamanten (7) zu formen, das Positionieren und/oder Ausrichten und/oder Fokussieren des Einrichtungsbildes auf dem Edelstein oder Diamanten (7) und das Projizieren der Belichtungsstrahlung durch die Maske (35), um ein Belichtungsbild auf dem Edelstein oder Diamanten (7) zu formen und infolgedessen die Markierung auf dem Edelstein oder Diamanten (7) zu formen, umfasst.

13. Verfahren nach Anspruch 12, wobei der Belichtungsbereich eine Form definiert, die derjenigen der zu formenden Markierung entspricht.

14. Verfahren nach Anspruch 12, wobei der Belichtungsbereich ein verhältnismäßig großer Bereich ist, der für die Belichtungsstrahlung durchlässig ist, wobei die Belichtungsstrahlung abgetastet wird.

15. Verfahren nach einem der Ansprüche 1 bis 13, wobei das Belichtungsbild durch das Projizieren der Belichtungsstrahlung durch eine Maske (35) mit wesentlicher Verkleinerung geformt wird.

16. Verfahren nach Anspruch 15, wobei das Belichtungsbild höchstens etwa ein Zehntel der linearen Größe der Maske (35) hat.

17. Verfahren nach einem der vorhergehenden Ansprüche, wobei das Belichtungsbild durch das Projizieren der Belichtungsstrahlung durch eine Maske (35) geformt wird, wobei die Maske wenigstens eine Zone umfasst, die durch einzelne Bildpunkte gebildet wird, deren Maskierungswirkung willkürlich verändert werden kann, wodurch aufeinanderfolgende Edelsteine oder Diamanten unterschiedliche auf dieselben projizierte Belichtungsbilder haben können.

18. Verfahren nach einem der vorhergehenden Ansprüche, wobei die Einrichtungs- und die Belichtungsstrahlung durch einen Strahlenteiler (36) projiziert werden und das Einrichtungsbild durch den Strahlenteiler (36) betrachtet wird.

19. Verfahren zum Formen einer Markierung auf einem Edelstein (7), nach einem der Ansprüche 1 bis 18, wobei die Belichtungsstrahlung (31) durch eine Maske (35) auf den Edelstein (7) projiziert wird, um ein Belichtungsbild auf demselben zu formen, wobei die Maske (35) wenigstens eine Zone umfasst, die durch einzelne Bildpunkte gebildet wird, deren Maskierungswirkung willkürlich verändert werden kann, und das Projizieren unterschiedlicher Belichtungsbilder auf aufeinanderfolgende Edelsteine (7) durch das Verändern der Maskierungswirkung der Maske (35).

20. Verfahren nach Anspruch 19, wobei die Maske (35) Flüssigkristall-Lichtventile umfasst.

21. Verfahren nach Anspruch 19, wobei die Maske (35) eine Mikrospiegelanordnung umfasst.

22. Vorrichtung zum Formen einer Markierung auf einem Edelstein oder Diamanten (7) unter Verwendung einer Belichtungsstrahlung, wobei die Vorrichtung Folgendes umfasst:
ein optisches System (32, 34, 35, 38) für das Projizieren eines Bildes auf den Edelstein oder Diamanten (7),
Mittel (31) für das Projizieren der Belichtungsstrahlung, um ein Belichtungsbild auf dem Edelstein oder Diamanten (7) zu formen,
Mittel (31) für das Projizieren einer Einrichtungsstrahlung auf den Edelstein oder Diamanten (7), wobei die Einrichtungsstrahlung den Edelstein oder Diamanten (7) nicht auf eine solche Weise beeinflusst, dass eine Markierung geformt wird oder werden wird, und
Mittel für das Einstellen des Belichtungsbildes auf dem Edelstein oder Diamanten (7),
**dadurch gekennzeichnet, dass** die Projektionsmittel (31) für die Einrichtungsstrahlung ein Einrichtungsbild auf dem Edelstein oder Diamanten (7) formen und die Einstellungsmittel dafür dienen, die Position und/oder Ausrichtung und/oder Fokussierung des Einrichtungsbildes auf dem Edelstein oder Diamanten (7) einzustellen, um dadurch die Position und/oder Ausrichtung und/oder Fokussierung des Belichtungsbildes auf dem Edelstein oder Diamanten (7) einzustellen,
und dass die Vorrichtung des Weiteren Mittel (44) für das Abfühlen des Einrichtungsbildes auf dem Edelstein oder Diamanten (7) umfasst, wobei sich diese Mittel außerhalb des Lichtweges befinden, dem durch die Einrichtungsstrahlung gefolgt wird, bevor sie den Edelstein oder Diamanten (7) erreichen.

23. Vorrichtung nach Anspruch 22, wobei das Einrichtungsbild durch eine Objektivlinse oder ein Linsensystem (38) projiziert wird und durch die Objektivlinse oder das Linsensystem (38) abgefühlt wird.

24. Vorrichtung nach Anspruch 22 oder 23, wobei die Einrichtungs- und die Belichtungsstrahlung unterschiedliche Wellenlängen haben.

25. Vorrichtung nach Anspruch 22 und Anspruch 23, wobei die Objektivlinse oder das Linsensystem (38) für die Einrichtungsstrahlung und für die Belichtungsstrahlung korrigiert ist.

26. Vorrichtung nach Anspruch 22 oder 23, wobei die Einrichtungs- und die Belichtungsstrahlung die gleichen Wellenlängen oder Wellenlängenbänder haben, aber die Einrichtungsstrahlung eine Intensität hat, die geringer ist als diejenige der Belichtungsstrahlung.

27. Vorrichtung nach einem der Ansprüche 22 bis 26, wobei die Einrichtungsstrahlung im sichtbaren Bereich liegt.

28. Vorrichtung nach Anspruch 27, wobei das Einrichtungsbild (44) mit dem Auge betrachtet werden kann, um mit dem Auge die Position und/oder Ausrichtung und/oder Fokussierung des Belichtungsbildes auf dem Edelstein oder Diamanten einzustellen.

29. Vorrichtung nach Anspruch 28 und die Vergrößerungsmittel für das Betrachten des Einrichtungsbildes mit dem Auge umfasst.

30. Vorrichtung nach einem der Ansprüche 22 bis 27, die einen elektronischen Bildsensor für das Erfassen der Einrichtungsmarkierung umfasst, um dadurch ein Signal bereitzustellen, um die Position und/oder Ausrichtung und/oder Fokussierung des Einrichtungsbildes auf dem Edelstein oder Diamanten (7) einzustellen.

31. Vorrichtung nach einem der Ansprüche 22 bis 29 und die Mittel zum Halten einer Maske (35) umfasst, wobei das optische System (32, 34, 35, 38) dafür dient, ein Bild der Maske auf den Edelstein oder Diamanten zu projizieren.

32. Vorrichtung nach Anspruch 31, wobei das optische System (32, 34, 35, 38) das Bild der Markierung mit wesentlicher Verkleinerung projiziert.

33. Vorrichtung nach Anspruch 32, wobei das Belichtungsbild höchstens etwa ein Zehntel der linearen Größe der Maske (35) hat.

34. Vorrichtung nach einem der Ansprüche 31 bis 33, wobei die Maske (35) wenigstens eine Zone umfasst, die durch einzelne Bildpunkte gebildet wird, deren Maskierungswirkung willkürlich verändert werden kann, wodurch aufeinanderfolgende Edelsteine oder Diamanten (7) unterschiedliche auf dieselben projizierte Belichtungsbilder haben können.

35. Vorrichtung nach einem der Ansprüche 31 bis 34, wobei die Maske (35) Flüssigkristall-Lichtventile umfasst.

36. Vorrichtung nach einem der Ansprüche 31 bis 34, wobei die Maske eine Mikrospiegelanordnung umfasst.

## Revendications

1. Procédé de formation d'une marque sur une pierre précieuse ou un diamant industriel (7), comprenant l'étape de projection (31) d'un rayonnement d'exposition sur la pierre précieuse ou le diamant (7), pour y former une image d'exposition, le procédé comprenant également les étapes de positionnement et/ou d'orientation et/ou de focalisation de l'image d'exposition en projetant (31) sur la pierre précieuse ou le diamant (7) un rayonnement de réglage différent du rayonnement d'exposition, le rayonnement de réglage n'affectant pas la pierre précieuse ou le diamant (7), de sorte qu'une marque est ou sera formée, **caractérisé en ce qu'**une image de réglage est formée sur la pierre précieuse ou le diamant (7), l'emplacement et/ou l'orientation et/ou la focalisation de l'image de réglage sur la pierre précieuse ou le diamant (7) étant ajustés, pour ajuster ainsi l'emplacement, l'orientation et/ou la focalisation de l'image d'exposition, l'image de réglage sur la pierre précieuse ou le diamant (7) étant détectée (44) à l'extérieur du trajet optique suivi par le rayonnement de réglage avant l'atteinte de la pierre précieuse ou du diamant (7).

2. Procédé selon la revendication 1, dans lequel l'image de réglage est projetée à travers un objectif ou un système de lentille (38) et est détectée par l'intermédiaire de l'objectif ou du système de lentille.

3. Procédé selon les revendications 1 ou 2, dans lequel les rayonnements de réglage et d'exposition ont des longueurs d'onde différentes.

4. Procédé selon les revendications 2 ou 3, dans lequel l'objectif ou le système de lentille (38) est corrigé pour le rayonnement de réglage et le rayonnement d'exposition.

5. Procédé selon les revendications 1 ou 2, dans lequel les rayonnements de réglage et d'exposition ont les mêmes longueurs d'onde ou la même bande de longueurs d'onde, le rayonnement de réglage ayant toutefois une intensité inférieure à celle du rayonnement d'exposition.

6. Procédé selon l'une quelconque des revendications précédentes, dans lequel la marque est formée par lithographie, une photorésine ayant été appliquée sur la pierre précieuse ou le diamant industriel (7), la photorésine étant insensible audit rayonnement de réglage.

7. Procédé selon l'une quelconque des revendications précédentes, dans lequel le rayonnement de réglage se situe dans le domaine visible.

8. Procédé selon la revendication 7, dans lequel l'image de réglage est visible à l'oeil.

9. Procédé selon l'une quelconque des revendications 1 à 7, dans lequel l'image de réglage est détectée par un détecteur d'image électronique.

10. Procédé selon l'une quelconque des revendications précédentes, dans lequel l'image de réglage est formée en projetant le rayonnement de réglage à travers un masque (35), l'image d'exposition étant formée en projetant le rayonnement d'exposition à travers un masque (35).

11. Procédé selon la revendication 10, dans lequel le masque de réglage (35) est au moins en partie identique au masque d'exposition (35), le rayonnement de réglage et le rayonnement d'exposition étant projetés à travers le masque (35) et le système optique étant corrigé pour le rayonnement de réglage et le rayonnement d'exposition.

12. Procédé selon l'une quelconque des revendications précédentes, dans lequel les masques de réglage et d'exposition (35) sont formés en fournissant un masque comprenant au moins une région de réglage opaque au rayonnement d'exposition mais transparente au rayonnement de réglage, et au moins une région d'exposition, transparente au rayonnement d'exposition, la région de réglage définissant une forme pour positionner et/ou orienter et/ou focaliser l'image d'exposition sur la pierre précieuse ou le diamant (7), le procédé comprenant les étapes de projection (31) du rayonnement de réglage à travers le masque (35), pour former une image de réglage sur la pierre précieuse ou le diamant (7), de positionnement et/ou d'orientation et/ou de focalisation de ladite image de réglage sur la pierre précieuse ou le diamant (7), et de projection du rayonnement d'exposition à travers le masque (35), pour former une image d'exposition sur la pierre précieuse ou le diamant (7) et pour former ainsi ladite marque sur la pierre précieuse ou le diamant (7).

13. Procédé selon la revendication 12, dans lequel la région d'exposition définit une forme correspondant à celle de la marque devant être formée.

14. Procédé selon la revendication 12, dans lequel la région d'exposition est une région relativement grande, transparente au rayonnement d'exposition, le rayonnement d'exposition étant balayé.

15. Procédé selon l'une quelconque des revendications 1 à 13, dans lequel l'image d'exposition est formée en projetant le rayonnement d'exposition à travers un masque (35), avec un dégrossissement notable.

16. Procédé selon la revendication 15, dans lequel l'image d'exposition représente au maximum environ un dixième de la taille linéaire du masque (35).

17. Procédé selon l'une quelconque des revendications précédentes, dans lequel l'image d'exposition est formée en projetant le rayonnement d'exposition à travers un masque (35), le masque comprenant au moins une zone formée par des pixels individuels, dont l'effet de masquage peut être changé selon les besoins, différentes images d'exposition pouvant ainsi être projetées sur des pierres précieuses successives ou des diamants successifs.

18. Procédé selon l'une quelconque des revendications précédentes, dans lequel les rayonnements de réglage et d'exposition sont projetés à travers un diviseur de faisceau (36), l'image de réglage étant visualisée à travers le diviseur de faisceau (36).

19. Procédé de formation d'une marque sur une pierre précieuse (7) selon l'une quelconque des revendications 1 à 18, dans lequel le rayonnement d'exposition est projeté (31) à travers un masque sur la pierre précieuse (7), pour y former une image d'exposition, le masque (35) comprenant au moins une zone formée par des pixels individuels dont l'effet de masquage peut être changé selon les besoins, différentes images d'exposition étant projetées sur des pierres précieuses successives (7) en changeant l'effet de masquage du masque (35).

20. Procédé selon la revendication 19, dans lequel le masque (35) comprend des valves à cristaux liquides.

21. Procédé selon la revendication 19, dans lequel le masque (35) comprend un réseau de micromiroirs.

22. Appareil destiné à être utilisé pour former une marque sur une pierre précieuse ou un diamant (7) par l'intermédiaire d'un rayonnement d'exposition, comprenant :
un système optique (32, 34, 35, 38) pour projeter une image sur la pierre précieuse ou le diamant (7);
des moyens (31) pour projeter le rayonnement d'exposition afin de former une image d'exposition sur la pierre précieuse ou le diamant (7);
des moyens (31) pour projeter un rayonnement de réglage sur la pierre précieuse ou le diamant (7), le rayonnement de réglage n'affectant pas la pierre précieuse ou le diamant (7), de sorte qu'une marque est ou sera formée;
des moyens pour ajuster l'image d'exposition sur la pierre précieuse ou le diamant (7);
**caractérisé en ce que** les moyens de projection du rayonnement de réglage (31) forment une image de réglage sur la pierre précieuse ou le diamant (7), les moyens d'ajustement servant à ajuster l'emplacement et/ou l'orientation et/ou la focalisation de l'image de réglage sur la pierre précieuse ou le diamant (7), pour ajuster ainsi l'emplacement et/ou l'orientation et/ou la focalisation de l'image d'exposition sur la pierre précieuse ou le diamant (7) ;
et **en ce que** l'appareil comprend en outre des moyens (44) pour détecter l'image de réglage sur la pierre précieuse ou le diamant (7), ces moyens se situant hors du trajet optique suivi par le rayonnement de réglage avant l'atteinte de la pierre précieuse ou du diamant (7).

23. Appareil selon la revendication 22, dans lequel l'image de réglage est projetée à travers un objectif ou un système de lentille (38) et est détectée par l'intermédiaire de l'objectif ou du système de lentille (38).

24. Appareil selon les revendications 22 ou 23, dans lequel les rayonnements de réglage et d'exposition ont des longueurs d'onde différentes.

25. Appareil selon les revendications 23 et 24, dans lequel l'objectif ou le système de lentille (38) est corrigé pour le rayonnement d'exposition et le rayonnement de réglage.

26. Appareil selon les revendications 22 ou 23, dans lequel les rayonnements de réglage et d'exposition ont la même longueur d'onde ou la même bande de longueurs d'onde, le rayonnement de réglage ayant toutefois une intensité inférieure à celle du rayonnement d'exposition.

27. Appareil selon l'une quelconque des revendications 22 à 26, dans lequel ledit rayonnement de réglage se situe dans le domaine visible.

28. Appareil selon la revendication 27, dans lequel l'image de réglage (44) est visible à l'oeil, pour ajuster visuellement l'emplacement et/ou l'orientation et/ou la focalisation de l'image de réglage sur la pierre précieuse ou le diamant.

29. Appareil selon la revendication 28, comprenant en outre un moyen de grossissement pour visualiser l'image de réglage.

30. Appareil selon l'une quelconque des revendications 22 à 27, comprenant un détecteur d'image électronique pour détecter la marque de réglage, pour transmettre ainsi un signal en vue d'ajuster l'emplacement et/ou la focalisation de l'image de réglage sur la pierre précieuse ou le diamant (7).

31. Appareil selon l'une quelconque des revendications 22 à 29, comprenant en outre un moyen pour tenir un masque (35), le système optique (32, 34, 35, 38) servant à projeter une image du masque sur la pierre précieuse ou le diamant.

32. Appareil selon la revendication 31, dans lequel le système optique (32, 34, 35, 38) assure la projection de l'image de la marque avec un dégrossissement notable.

33. Appareil selon la revendication 32, dans lequel l'image d'exposition représente au maximum environ un dixième de la taille linéaire du masque (35).

34. Appareil selon l'une quelconque des revendications 31 à 33, dans lequel le masque (35) comprend au moins une zone formée par des pixels individuels, dont l'effet de masquage peut être changé selon les besoins, différentes images d'exposition pouvant ainsi être projetées sur des pierres précieuses successives ou des diamants successifs (7).

35. Appareil selon l'une quelconque des revendications 31 à 34, dans lequel le masque (35) comprend des valves à cristaux liquides.

36. Appareil selon l'une quelconque des revendications 31 à 34, dans lequel le masque comprend un réseau de micromiroirs.
